# EUROPÄISCHE PATENTANMELDUNG

(11) **EP 1 263 203 A2**
(43) Veröffentlichungstag der Anmeldung: **04.12.2002**
(21) Anmeldenummer: 02010831.2
(22) Anmeldetag: 15.05.2002
(51) Int. Cl.: H04M 9/00

(54) **Verfahren zur Handhabung von Audiodateien in Telekommunikationseinrichtungen sowie dazugehörige Telekommunikationseinrichtung**

(30) Priorität: 21.05.2001 DE 10124823
(71) Anmelder: Tenovis GmbH & Co. KG, 60326 Frankfurt am Main (DE)
(72) Erfinder: Hofmann, Jan, 35274 Kirchhain (DE); Brandt, Hubertus, 64839 Münster (DE); Buch, Andreas, 64409 Messel (DE)
(74) Vertreter: Leson, Thomas Johannes Alois, Dipl.-Ing.

(57) **Zusammenfassung**

Vorgeschlagen wird ein Verfahren zur Handhabung von Audiodateien in Telekommunikationseinrichtungen (1) mit einer Speichereinrichtung (2) zum Speichern von Audiodateien und einer Steuereinrichtung (3) zum Erzeugen von Audiodateien auf der Grundlage unterschiedlicher Tonsignale, zum Ablegen von Audiodateien in der Speichereinrichtung und zum Abrufen von in der Speichereinrichtung gespeicherten Audiodateien nach Maßgabe vorbestimmter Steuerbefehle.

## Beschreibung

Die Erfindung bezieht sich auf ein Verfahren zur Handhabung von Audiodateien in Telekommunikationseinrichtungen sowie eine Telekommunikationseinrichtung, die Audiodateien in entsprechender Form handhabt.

Herkömmliche Telekommunikationseinrichtungen sind heutzutage mit einer Vielzahl von unterschiedlichen Funktionen versehen. So können insbesondere Telekommunikationseinrichtungen zur Speicherung von Ansagen und Mitteilungen verwendet werden. Darüber hinaus kann dem Anrufer bei Bedarf eine entsprechende Wartemusik eingespielt werden, die normalerweise von einem externen Gerät geliefert wird. Schließlich muss die Telekommunikationseinrichtung noch eine Vielzahl unterschiedlicher Hör- und Signaltöne zur Verfügung stellen, wie beispielsweise unterschiedliche Freizeichen für interne und externe Verbindungen, Belegtzeichen oder Anruftöne für den Anrufer.

Die Aufgaben werden bei herkömmlichen Telekommunikationseinrichtungen üblicherweise von unterschiedlichen Komponenten wahrgenommen. Hierdurch wird die Telekommunikationseinrichtung verhältnismäßig aufwendig und teuer.

Mit der Erfindung wird ein Verfahren zur Handhabung von Audiosignalen in Telekommunikationseinrichtungen sowie eine entsprechende Telekommunikationseinrichtung zur Lösung dieser Probleme vorgeschlagen.

Diese Aufgabe wird hinsichtlich des Verfahrens mit den im Anspruch 1 angegebenen Maßnahmen und hinsichtlich der Einrichtung mit den im Anspruch 11 angegebenen Merkmalen gelöst.

Vorteilhafte Weiterbildungen der Erfindung sind Gegenstand der Unteransprüche.

Die erfindungsgemäße Telkommunikationseinrichtung umfasst eine Speichereinrichtung zum Speichern von Audiodaten und eine Steuereinrichtung. Bei dem Verfahren dient die Steuereinrichtung zum Erzeugen von Audiodateien auf der Grundlage unterschiedlicher Tonsignale, zum Ablegen von Audiodateien in der Speichereinrichtung und zum Abrufen von in der Speichereinrichtung gespeicherten Audiodateien nach Maßgabe vorbestimmter Steuerbefehle.

Durch ein solches Verfahren bzw. eine solche Einrichtung wird es ermöglicht, alle in der Telekommunikationseinrichtung vorkommenden Hörtöne, Musikstücke und Sprachdateien auf einer einzigen Speichereinrichtung abzulegen und bei Bedarf abzurufen. Dies führt zu einer entsprechenden Vereinfachung des Verfahrens bzw. der Einrichtung.

Durch Verwendung desselben Datenformats für alle von der Steuereinrichtung erzeugten Audiodateien wird darüber hinaus eine weitere Vereinfachung des gesamten Verfahrens und damit der gesamten Vorrichtung erzielt.

Wird dabei das Datenformat MP3 verwendet, können einerseits Musikstücke im Datenformat MP3 direkt auf der Speichereinrichtung abgelegt werden und der gesamte Platzbedarf für alle Audiodateien entsprechend reduziert werden. Hierdurch sind keine anderen Komponenten für die entsprechenden Audiodateien erforderlich bzw. ein externes Gerät zur Zuführung von Musiksignalen zu der Telekommunikationseinrichtung wird überflüssig.

Bei der erfindungsgemäßen Einrichtung bzw. dem erfindungsgemäßen Verfahren ist die Steuereinrichtung in der Lage, Audiodateien von vorbestimmten Formaten auf der Grundlage von digitalen oder analogen Tonsignalen zu erzeugen, die über eine Netzschnittstelle, eine Datenschnittstelle oder über eine Teilnehmerschnittstelle zugeführt werden. Bei über die Netzschnittstelle zugeführten Tonsignalen kann es sich dabei um Nachrichten eines Anrufers handeln. Über eine Datenschnittstelle können Musikstücke von beliebigem Format von einem mit der Datenschnittstelle direkt oder indirekt verbundenen Rechner zugeführt werden und über die Teilnehmerschnittstelle kann der interne Teilnehmer Ansagetexte aller Art zuführen. Dadurch, dass alle Tonsignale dabei jeweils in Audiodateien von vorbestimmtem Format gewandelt und gespeichert werden, ist der Aufwand beim Abrufen der einzelnen Tonsignale verhältnismäßig gering, da dann ein einheitliches Datenformat vorliegt.

Darüber hinaus ist die Steuereinrichtung in der Lage, Audiodaten eines vorbestimmten Datenformates ohne Vorverarbeitung in der Speichereinrichtung abzulegen, wenn dieses Datenformat ohnehin bereits dem in der Speichereinrichtung verwendeten Datenformat, beispielsweise MP3, entspricht. Diese Maßnahme vereinfacht das Ablegen von Dateien.

Bei der vorgeschlagenen Einrichtung bzw. bei dem vorgeschlagenen Verfahren ist ein Abrufen von Audiodateien einerseits automatisch bei einem vorbestimmten Steuerungszustand der Steuereinrichtung, oder andererseits auf ein von einem internen oder externen Teilnehmer manuell erzeugtes Steuersignal hin, möglich. Bei einem vorbestimmten Steuerungszustand kann es sich dabei beispielsweise um einen Zustand handeln, bei dem ein externer Teilnehmer einen internen Teilnehmer nicht erreichen kann und dem externen Teilnehmer deshalb ein Ansagetext, beispielsweise eines Anrufbeantworters zugespielt wird. Auch ein externer Teilnehmer kann durch die Abgabe vorbestimmter Steuersignale, wie beispielsweise Tonwahlsignale (MFV) ein ihm eingespieltes Musikstück wählen oder abwählen. Schließlich kann auch der interne Teilnehmer durch Erzeugung eines entsprechend vorbestimmten Steuersignals entweder entsprechende Nachrichten abrufen oder seinerseits ein geeignetes Musikstück für denn Fall eines Anrufes bei ihm wählen.

Auch das Ablegen von Audiodateien kann automatisch bei einem vorbestimmten Steuerungszustand der Steuereinrichtung oder auf ein von einem internen oder externen Teilnehmer manuell erzeugtes Steuersignal hin erfolgen. Die gleichzeitige Vorsehung der genannten Möglichkeiten des Abrufens und Ablegens von Audiodateien erhöht die Funktionalität der Anlage und vereinfacht gleichzeitig deren Aufbau.

Abgerufene Audiodateien werden den jeweiligen Teilnehmern nach geeigneter Umwandlung über ein Koppelfeld zugeführt. Was dabei unter einer geeigneten Umwandlung zu verstehen ist, hängt von der Technik des Gerätes des internen Teilnehmers aber auch von der Technik des öffentlichen Netzes ab.

Alternativ zu dieser Maßnahme können alle Audiodateien auch in einem Dateiformat gespeichert werden, in dem sie dem Koppelfeld zugeführt werden können. Durch diese Maßnahme wird der Umwandlungsschritt eingespart.

Bei der Speichereinrichtung zur Speicherung der Audiodateien handelt es sich um die Speichereinrichtung der Telekommunikationseinrichtung, die gleichzeitig auch zum Speichern der Steuerprogramme dient. Somit ist keine zusätzliche Speichereinrichtung innerhalb der Telekommunikationseinrichtung erforderlich, was eine weitere Vereinfachung bedingt.

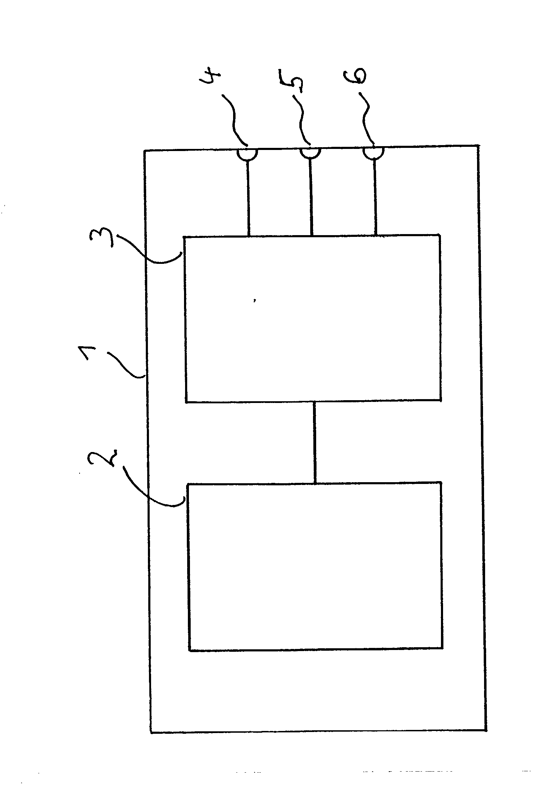

Die Erfindung wird nachfolgend anhand der Figur näher erläutert.

Die Figur zeigt ein Blockschaltbild einer Telekommunikationseinrichtung, bei der alle für die Erfindung nicht wesentlichen Bestandteile weggelassen sind.

Mit 1 ist die Telekommunikationseinrichtung, mit 2 eine Speichereinrichtung, mit 3 eine Steuereinrichtung, mit 4 eine Netzschnittstelle, mit 5 eine Datenschnittstelle und mit 6 eine Teilnehmerschnittstelle bezeichnet.

Bei der Telekommunikationseinrichtung 1 kann es sich um eine Telekommunikationseinrichtung von beliebiger Größe handeln, die zwischen einem und einer Vielzahl von internen Teilnehmern aufweisen kann.

Bei der Speichereinrichtung 2 kann es sich um einen einzigen Speicher handeln, der in eine Vielzahl von Sektoren unterteilt ist, oder die Speichereinrichtung 2 umfasst einen ersten Bereich für die Steuerprogramme der Telekommunikationseinrichtung und einen zweiten Bereich für alle übrigen Daten, wohingegen der erste und zweite Bereich durchaus unterschiedlich aufgebaut sein können.

Bei der Steuereinrichtung 3 handelt es sich um eine bei einer Telekommunikationseinrichtung übliche Steuereinrichtung, die zur Steuerung aller Funktionen der Telekommunikationseinrichtung nach entsprechender Programmierung in der Lage ist. Die für die Steuereinrichtung benötigten Programme sind dabei in der Speichereinrichtung 2 abgelegt.

Die Netzschnittstelle 4 verbindet die Telekommunikationseinrichtung mit einem Netz, bei dem es sich um ein öffentliches Netz oder um ein privates Netz handeln kann. Je nach Größe der Telekommunikationseinrichtung weist die Netzschnittstelle eine entsprechende Vielzahl von Anschlüssen auf.

Bei der Datenschnittstelle 5 handelt es sich um eine Schnittstelle, mit der die Telekommunikationseinrichtung 1 beispielsweise zum Zwecke der Programmierung mit einem Rechner verbunden werden kann. Die Datenschnittstelle 5 kann beispielsweise als LAN-Schnittstelle, als USB-Schnittstelle, als V24-Schnittstelle oder als parallele oder drahtlose Schnittstelle ausgebildet sein.

Die Teilnehmerschnittstelle 6 dient zur Verbindung der Telekommunikationseinrichtung mit den internen Teilnehmern. Die Anzahl der Teilnehmerschnittstellen 6 richtet sich nach der Anzahl der internen Teilnehmer, für die die Telekommunikationseinrichtung vorgesehen ist und damit nach der Größe der Telekommunikationseinrichtung. Ist nur ein interner Teilnehmer vorgesehen und stellt die Telekommunikationseinrichtung gleichzeitig auch das Telekommunikationsendgerät dar, ist die Teilnehmerschnittstelle selbstverständlich entbehrlich.

Je nach dem verwendeten technischen Standard kann es sich sowohl bei der Netzschnittstelle 4 als auch bei der Teilnehmerschnittstelle 6 um analoge oder digitale Schnittstellen handeln. Auch kann die eine Schnittstelle analog und die andere Schnittstelle digital ausgeführt sein.

### VERWENDUNG DER TELEKOMMUNIKATIONSEINRICHTUNG ALS ABSPIELGERÄT

Zum Laden der Musikstücke als Audiodateien wird zunächst ein herkömmlicher Rechner mit der Datenschnittstelle 5 verbunden. Auf diesem Rechner befindet sich ein Programm zum Laden von Musikstücken in der Speichereinrichtung 2 der Telekommunikationseinrichtung 1.

Vorteilhafterweise sind die Musikstücke auf dem mit der Datenschnittstelle 5 verbundenen Rechner bereits in einem Format, in dem sie in der Speichereinrichtung 2 abgespeichert werden sollen. In diesem Fall können die Musikstücke direkt ohne weitere Umsetzung in der Speichereinrichtung 2 abgelegt werden.

Sind dagegen die Musikstücke in dem Rechner in einem Datenformat geladen, das nicht dem Datenformat entspricht, in dem diese Musikstücke in der Speichereinrichtung 2 als Audiodateien abgelegt werden sollen, müssen die Musikstücke zunächst umgesetzt werden. Diese kann entweder in dem mit der Datenschnittstelle 5 verbundenen Rechner passieren oder direkt in der Steuereinrichtung 3 der Telekommunikationseinrichtung, die hierfür ein geeignetes Konvertierungsprogramm benötigt.

Werden beispielsweise in der Speichereinrichtung 2 alle Audiodateien im MP3 Format abgelegt, und liefert der mit der Datenschnittstelle 5 verbundene Rechner Musikstücke direkt von einer CD, beispielsweise im WAVE Format, so kann die Steuereinrichtung 3 entsprechende Audiodateien im MP3 Format auf der Grundlage einer ihr zugeführten WAVE Datei erzeugen. Die Programme zum Umsetzen von WAVE Dateien in MP3 Dateien sind hinlänglich bekannt, so dass hierfür keine weitere Erläuterung erforderlich erscheint.

Selbstverständlich können die Audiodateien auch in einem anderen Datenformat als dem MP3 Format in der Speichereinrichtung 2 abgelegt werden, beispielsweise als WAVE Datei oder als Dateiformat G.711a-law/ulaw, bei dem es sich um ein Datenformat handelt, in dem sich die Audiodateien direkt in das Koppelfeld der Telekommunikationseinrichtung 1 einspeisen lassen.

Im Hinblick auf eine komprimierte Speicherung der Audiodateien ist aber eine stark komprimierende Codierung, wie beispielsweise das MP3 Format vorzuziehen.

Das Abspielen der Audiodateien, beispielsweise als Music on Hold ist verhältnismäßig einfach. Die beispielsweise als MP3 Datei gespeicherte Audiodatei wird aufgerufen und einem MP3 Decoder zugeführt. Das Ausgangssignal des MP3 Decoders wird über eine weitere Codiereinrichtung dem Koppelfeld zugeführt, wobei diese Codiereinrichtung eine Codierung in einen für das Koppelfeld geeigneten Code, beispielsweise den Code G.711a-law/ulaw Code vornimmt.

Werden die Audiodateien bereits in der für das Koppelfeld geeigneten Form in der Speichereinrichtung 2 abgelegt, entfällt selbstverständlich der oben genannte Decodierungs- und Codierungsschritt.

Das Abspeichern von Musikstücken in einem stark komprimierenden Format auf der Speichereinrichtung 2 der Telekommunikationseinrichtung 1 macht ein zusätzliches externes Gerät entbehrlich. Dadurch entfällt der Platz, die Bedienung, die Pflege und die Wartung des zusätzlichen Gerätes.

Darüber hinaus kann der Betreiber der Telekommunikationseinrichtung jederzeit auf einfache Weise die vorhandenen Musikstücke durch andere ersetzen und ist dabei an keinerlei Einschränkungen gebunden.

Alternativ zu der oben genannten Vorgehensweise des Ladens von Musikstücken mittels einem an der Datenschnittstelle 5 angeschlossenen Rechners können entsprechende Musikstücke auch über die Netzschnittstelle 4 geladen werden. Dieser Vorgang kann über die Teilnehmerschnittstelle 6 von einem Teilnehmerendgerät aus gesteuert werden. Bei dieser Vorgehensweise können beispielsweise aus dem Internet entsprechende Musikstücke heruntergeladen und direkt in die Speichereinrichtung 2 eingegeben werden.

Gleichzeitig kann mittels einem an einer Teilnehmerschnittstelle 6 angeschlossenen Telekommunikationsendgeräts auch eine Auswahl der in der Speichereinrichtung 2 abgelegten Audiodateien erfolgen. Der Benutzer der Telekommunikationseinrichtung kann dabei beispielsweise festlegen, zu welcher Zeit welche Musikstücke als Music on Hold gespielt werden oder aber auch festlegen, dass abhängig von dem jeweiligen internen Teilnehmer oder dem jeweiligen externen Teilnehmer bestimmte Musikstücke zu verwenden sind.

### WAHLMÖGLICHKEIT DER GEHÖRTEN MUSIC ON HOLD FÜR EXTERNE TEILNEHMER

Geht die Verbindung eines externen Teilnehmers in einen Haltezustand über, beispielsweise weil alle internen Leitungen belegt sind, oder aber der interne Teilnehmer auf Rückfrage umgeschaltet hat, so wird dem externen Teilnehmer Music on Hold eingespielt. Um den externen Teilnehmer bei längeren Wartephasen nicht mit einer Musik zu verärgern, die seinen Geschmack nicht trifft, soll der externe Teilnehmer zwischen mehreren unterschiedlichen Musikstücken auswählen können.

Um ein entsprechendes Musikstück auszuwählen, hat der externe Teilnehmer lediglich eine der Tasten seines Telekommunikationsendgerätes zu bedienen. In der Telekommunikationseinrichtung 1 wird dabei überprüft, welche der Tasten bedient worden ist, und das entsprechende Musikstück ausgewählt.

Als Steuerbefehle können dabei beispielsweise Mehrfrequenzwahlverfahrenzeichen verwendet werden oder auch normale Wählsignale.

Um den externen Teilnehmer von der Wahlmöglichkeit zu informieren, wird entweder vor Beginn der Einspielung eines Musikstückes oder gleichzeitig während das erste Musikstück eingespielt wird, eine entsprechende Ansage geschaltet, die den externen Teilnehmer über die Wahlmöglichkeit informiert. Dieser Ansagetext kann selbstverständlich ebenfalls als Audiodatei in der Speichereinrichtung 2 abgelegt sein.

Die Wahlmöglichkeit eines entsprechenden Musikstückes lässt sich bei einer bestehenden Telekommunikationseinrichtung ohne weitere Komponenten realisieren, da bereits die bestehenden Komponenten durch einfache Umprogrammierung für diese Aufgabe herangezogen werden können.

### WIEDERGABE VON AUDIODATEIEN WÄHREND GESPRÄCHSVERBINDUNGEN

Dem internen Teilnehmer soll die Möglichkeit gegeben werden, während einer bestehenden Gesprächsverbindung akustische Signale einzublenden, die zuvor als Audiodateien in der Speichereinrichtung 2 abgelegt worden sind. Bei solchen Audiodateien kann es sich zum Beispiel um eine Audiosignatur handeln, d.h. auf die Bitte eines externen Gesprächsteilnehmers hin betätigt der interne Teilnehmer eine vorbestimmte Steuertaste, die ein Abspielen einer Audiodatei veranlasst, in der die gewünschten Angaben in gesprochener Form enthalten sind. Dabei kann es sich zum Beispiel um den Namen, die Adresse, die Telefonnummer, die Faxnummer, die E-Mail Adresse oder weitere Angaben dieser Art handeln.

Solche Audiodateien lassen sich wahlweise während eines bestehenden Gespräches oder an dessen Ende einblenden.

Auch kann durch entsprechende Programmierung der Steuereinrichtung 3 eine Audiodatei in das Gespräch eingeblendet werden, die als Untermalung dient. Hierbei kann es sich beispielsweise um vorbestimmte Geräusche oder aber um vorbestimmte Musikstücke handeln.

Die Bedienprozedur zum Aufnehmen solcher Audiodateien ist verhältnismäßig einfach und ähnlich dem Aufnehmen eines Ansagetextes für einen Anrufbeantworter ausgebildet. Der interne Teilnehmer kann die entsprechenden Audiodateien beispielsweise über das Mikrofon des Handapparates erzeugen. Darüber hinaus ist auch der Import von Audiodateien von anderen Tonquellen möglich. Auf das Aufnehmen der Audiodateien hin erfolgt noch ein Schritt, bei dem festgelegt wird, auf die Betätigung welcher Steuertaste der Telekommunikationsendeinrichtung des internen Teilnehmers hin welche Audiodatei abspielt werden.

Der gesamte Steuerungsalgorithmus zum Ablegen von entsprechenden Audiodateiein bei diesem Verfahren kann dabei auf der Steuereinrichtung 3 der Telekommunikationseinrichtung 1 abgelegt sein. Insofern sind gegenüber einer herkömmlichen Kommunikationseinrichtung keinerlei weitere gegenständliche Einrichtungen erforderlich.

### SONSTIGE FUNKTIONEN

Bei der vorgeschlagenen Telekommunikationseinrichtung können alle Arten von akustischen Ansagen, Musikstücken oder Hörtöne in Form von Audiodateien in der Speichereinrichtung 2 abgelegt werden. So können z.B. allgemeine Ansagen eines Anrufbeantworters oder Ansagen im Falle eines Belegtzustandes oder einer Weiterschaltung mit dem Mikrofon eines an die Teilnehmerschnittstelle 6 angeschlossenen Telekommunikationsendgerätes generiert werden.

Gleichzeitig können auch alle ankommenden Nachrichten eines Anrufbeantworters bzw. einer Mailbox als Audiodatei in der Speichereinrichtung 2 abgelegt werden.

Darüber hinaus können auch alle Hörtöne, wie beispielsweise das Freizeichen oder das Besetztzeichen als Audiodateien in der Speichereinrichtung 2 abgelegt werden.

Werden alle Audiodateien, d.h. alle Hörtondateien, alle Musikdateien und alle Sprachdateien in dem selben Format in der Speichereinrichtung 2 abgelegt, vereinfacht dies den hardwaremäßigen Aufwand der Telekommunikationseinrichtung entsprechend.

Wird dabei ein hochkomprimierendes Datenformat, wie beispielsweise das MP3 Format verwendet, reduziert sich der entsprechende Aufwand an Speicherplatz in der Speichereinrichtung 2 entsprechend.

Werden alle Audiodateien dagegen in einem für das Koppelfeld bzw. die Weitergabe an einen internen oder externen Teilnehmer geeigneten Form in der Speichereinrichtung 2 abgelegt, reduziert sich der Aufwand für eine entsprechende Dekomprimierung und Umsetzung in das entsprechende Datenformat entsprechend.

Vorgeschlagen wird ein Verfahren zur Handhabung von Audiodateien in Telekommunikationseinrichtungen (1) mit einer Speichereinrichtung (2) zum Speichern von Audiodateien und einer Steuereinrichtung (3) zum Erzeugen von Audiodateien auf der Grundlage unterschiedlicher Tonsignale, zum Ablegen von Audiodateien in der Speichereinrichtung und zum Abrufen von in der Speichereinrichtung gespeicherten Audiodateien nach Maßgabe vorbestimmter Steuerbefehle.

## Patentansprüche

1. Verfahren zur Handhabung von Audiodateien in Telekommunikationseinrichtungen mit einer Speichereinrichtung zum Speichern von Audiodateien und einer Steuereinrichtung,
wobei Audiodateien auf der Grundlage unterschiedlicher Tonsignale erzeugt werden,
wobei Audiodateien in der Speichereinrichtung abgelegt werden und
wobei in der Speichereinrichtung gespeicherte Audiodateien nach Maßgabe vorbestimmter Steuerbefehle abgerufen werden.

2. Verfahren nach Anspruch 1, **dadurch gekennzeichnet, dass** alle erzeugten Audiodateien dasselbe Datenformat aufweisen.

3. Verfahren nach Anspruch 1, **dadurch gekennzeichnet, dass** alle erzeugten Audio-Dateien das Datenformat MP3 aufweisen.

4. Verfahren nach Anspruch 1, **dadurch gekennzeichnet, dass** Audiodateien vom vorbestimmten Datenformat auf der Grundlage von digitalen oder analogen Tonsignalen erzeugt werden, die über eine Netzschnittstelle, eine Datenschnittstelle oder über eine Teilnehmerschnittstelle zugeführt werden.

5. Verfahren nach Anspruch 1, **dadurch gekennzeichnet, dass** über eine Netzschnittstelle oder eine Datenschnittstelle zugeführte Audiodateien eines vorbestimmten Datenformates ohne Vorverarbeitung abgelegt werden.

6. Verfahren nach Anspruch 1, **dadurch gekennzeichnet, dass** ein Abrufen von Audiodateien automatisch bei einem vorbestimmten Steuerungszustand der Steuerungseinrichtung oder auf ein von einem internen oder externen Teilnehmer manuell erzeugtes Steuersignal hin erfolgt.

7. Verfahren nach Anspruch 1, **dadurch gekennzeichnet, dass** ein Ablegen von Audiodateien automatisch bei einem vorbestimmten Steuerungszustand der Steuerungseinrichtung oder auf ein von einem internen oder externen Teilnehmer manuell erzeugtes Steuersignal hin erfolgt.

8. Verfahren nach Anspruch 1, **dadurch gekennzeichnet, dass** abgerufene Audiodateien den jeweiligen Teilnehmern nach geeigneter Umwandlung über ein Koppelfeld zugeführt werden.

9. Verfahren nach Anspruch 1, **dadurch gekennzeichnet, dass** die Audiodateien Sprachsignale, Hörtöne oder Musik sein können.

10. Verfahren nach Anspruch 1, **dadurch gekennzeichnet, dass** die Speichereinrichtung auch zum Speichern von Steuerprogrammen dient.

11. Telekommunikationseinrichtung mit
einer Speichereinrichtung (2) zum Speichern von Audiodateien und
einer Steuereinrichtung (3)
zum Erzeugen von Audiodateien auf der Grundlage unterschiedlicher Tonsignale,
zum Ablegen von Audiodateien in der Speichereinrichtung und
zum Abrufen von in der Speichereinrichtung gespeicherten Audiodateien nach Maßgabe vorbestimmter Steuerbefehle

12. Telekommunikationseinrichtung nach Anspruch 11, **dadurch gekennzeichnet, dass** alle von der Steuereinrichtung erzeugten Audiodateien dasselbe Datenformat aufweisen.

13. Telekommunikationseinrichtung nach Anspruch 11, **dadurch gekennzeichnet, dass** alle von der Steuereinrichtung erzeugten Audiodateien das Datenformat MP3 aufweisen.

14. Telekommunikationseinrichtung nach Anspruch 11, **dadurch gekennzeichnet, dass** die Steuereinrichtung Audiodateien von vorbestimmtem Datenformat auf der Grundlage von digitalen oder analogen Tonsignalen erzeugt, die über eine Netzschnittstelle (4), eine Datenschnittstelle (5) oder über eine Teilnehmerschnittstelle (6) zugeführt werden.

15. Telekommunikationseinrichtung nach Anspruch 11, **dadurch gekennzeichnet, dass** die Steuereinrichtung Audiodateien eines vorbestimmten Datenformates ohne Vorverarbeitung ablegt, die über eine Netzschnittstelle (4) oder eine Datenschnittstelle (5) zugeführt werden.

16. Telekommunikationseinrichtung nach Anspruch 11, **dadurch gekennzeichnet, dass** ein Abrufen von Audiodateien automatisch bei einem vorbestimmten Steuerungszustand der Steuerungseinrichtung oder auf ein von einem internen oder externen Teilnehmer manuell erzeugtes Steuersignal hin erfolgt.

17. Telekommunikationseinrichtung nach Anspruch 11, **dadurch gekennzeichnet, dass** ein Ablegen von Audiodateien automatisch bei einem vorbestimmten Steuerungszustand der Steuerungseinrichtung oder auf ein von einem internen oder externen Teilnehmer manuell erzeugtes Steuersignal hin erfolgt.

18. Telekommunikationseinrichtung nach Anspruch 11, **dadurch gekennzeichnet, dass** abgerufene Audiodateien den jeweiligen Teilnehmern nach geeigneter Umwandlung über ein Koppelfeld zugeführt werden.

19. Telekommunikationseinrichtung nach Anspruch 11, **dadurch gekennzeichnet, dass** die Audiodateien Sprachsignale, Hörtöne oder Musik sein können.

20. Telekommunikationseinrichtung nach Anspruch 11, **dadurch gekennzeichnet, dass** die Speichereinrichtung auch zum Speichern von Steuerprogrammen dient.
